# EUROPEAN PATENT SPECIFICATION

(11) **EP 0 693 010 B1**
(45) Date of publication and mention of the grant of the patent: **05.03.1997**
(21) Application number: 94913037.1
(22) Date of filing: 30.03.1994
(51) Int. Cl.: B21D 51/32, G01M 7/00

(54) **A METHOD OF CONTROLLING THE CLOSING OF A CAN OR CONTAINER, AS WELL AS A CLOSING MACHINE FOR CARRYING OUT THE METHOD**
VERFAHREN ZUR VERSCHLUSSKONTROLLE EINES BEHÄLTERS, SOWIE VERSCHLUSSMASCHINE ZUM AUSFÜHREN DES VERFAHRENS
PROCEDE DE COMMANDE DE LA FERMETURE D'UNE BOITE OU D'UN RECIPIENT ET MACHINE DE FERMETURE UTILISANT LEDIT PROCEDE

(30) Priority: 06.04.1993 DK 410/93
(43) Date of publication of application: 24.01.1996
(73) Proprietor: KJAERGAARD INDUSTRI-AUTOMATIC A/S, DK-8723 Losning (DK)
(72) Inventor: PEDERSEN, Torben, Holm, DK-2670 Greve Strand (DK); J NSSON, Stig, Zimmermann, DK-2730 Herlev (DK)
(74) Representative: Siiger, Joergen
(86) International application number: DK9400139
(87) International publication number: WO9422614

(56) References cited:
- US-A- 2 320 390
- US-A- 3 985 018
- US-A- 4 406 157
- US-A- 4 869 097

## Description

### Technical Field

The invention relates to a method of controlling the closing of a can or a container being closed by mens of a closing machine which comprises one or more closing rolls or rollers, the control of said closing being performed by means of a sensor head.

### Background Art

Methods are known of detecting closing errors on cans. A common feature of these methods is that they are not performed until the can has been closed. Several methods require furthermore that the can has been stored for some time. Some of these methods are, however, not able to detect errors not appearing until the cans are handled.

US-PS No. 4,187,718 discloses a method and an apparatus for controlling the pressure inside hermetically sealed containers, whereby a sound wave in form of an attenuated oscillation is applied to the resilient container wall. The reaction of the container wall is detected by means of a pressure-sensitive transducer, such as a microphone, emitting an electric signal which can be registered and analyzed.

The object of the invention is to provide a method of controlling the closing of a can or a container, and which ensures that each can or container is accepted or rejected immediately after the closing procedure. Furthermore the rejected cans or containers must be able to improve the closing procedure on the cans or containers being closed later on.

Another object of the invention is to provide a machine for closing cans or containers, and where the arranging of a sensor head allows detection of sound or vibrations in connection with the closing of the can or the container in such a manner that supposed defective cans or containers can be discarded immediately.

The method according to the invention is characterised in that the sensor head used is formed by an accelerometer arranged on or adjacent one of the closing rolls or rollers closing the cans or the containers, and that a signal emitted by the accelerometer is compared with known references so as to indicate possible closing errors. In this manner the closing roll or rolls, roller or rollers serve both to perform the closing and to indicate possible atypical vibrations during the closing procedure. These vibrations are analyzed so as to indicate possible closing errors.

The signal emitted by the accelerometer may furthermore according to the invention be subjected to a signal analysis before it is compared with known references so as to indicate possible closing errors. As a result, irrelevant signals are excluded, and significant or at least previously detected, significant signals are emphasized.

Moreover according to the invention the signal emitted by the accelerometer may advantageously be subjected to a simple signal analysis, such as an RMS or peak factor analysis before it is compared with known references so as to indicate possible closing errors.

As an alternative the signal emitted by the accelerometer may be subjected to a more extensive analysis, such as a fourier, peak factor or curtotis analysis before it is compared with known references so as to ensure a supplementary failure diagnosis.

Furthermore according to the invention the signal emitted by the accelerometer may after a first signal analysis be subjected to a more extensive analysis by means of a neural network. In this manner the correction of errors is very dynamic, the tolerances are reduced, and the detection of errors is very accurate.

The invention relates also to a closing machine for carrying out the method according to the invention and comprising one or more closing rolls or rollers as well as at least one sensor head. This closing machine is characterised in that the sensor head is arranged adjacent the closing rolls or rollers and is formed by an accelerometer collecting information, such as vibrations. As a result, the signals in form of vibrations or sounds, optionally infrared or ultrasonic signals, can be reliably detected immediately, said signals optionally being caused by the co-operation of the closing roller with the can or the container during the closing procedure. Subsequently, the detected signals can be compared with known signals. As a result a "difference" is obtained which can be related to a malfunctioning during the closing of the can or the container. The arranging of sensor heads adjacent the closing rolls or rollers allows a capturing of information adjacent the malfunctioning spot and accordingly where the errors occur.

According to an embodiment of the invention the accelerometer may be arranged on the bearing of one roll or roller, whereby both the vibrations from the can and the vibrations from the bearing can be detected. It is important to observe the vibrations from the bearing because said vibrations are caused by a wear of said bearing which in turn causes an inaccurate closing of the can.

Furthermore according to the invention the roller adjacent the accelerometer may be a driven roller, whereby it is possible also to detect information on the condition of the driving motor or the driving means. A clearance or other types of inaccurate running in the driving means can indeed also cause closing errors and misvibrations.

Finally according to the invention the accelerometer may be mounted on the driving shaft of one of the closing rollers, whereby it is furthermore possible to detect suspicious vibrations optionally occurring at various times.

Finally according to the invention a sensor head may be provided adjacent each closing roll or roller in such a manner that a complex signal indication can be detected and processed so as to localize a defective can, and so that the closing machine can be adjusted to an optimum.

### Brief Description of the Drawing

The invention is explained in greater detail below with reference to the accompanying drawing, in which
Fig. 1 illustrates a method according to the invention of controlling the closing of a can by means of a closing machine with some closing rollers,
Fig. 2 illustrates the location of a sensor head adjacent one of the closing rollers,
Fig. 3A and 3B are sectional views of the closing rollers as well as the top piston,
Fig. 4 is a diagrammatic view of a can encumbered with closing errors,
   and
Figs. 5 to 9 illustrate examples of signals from the sensor head.

### Best Embodiment

The following expressions should be considered synonymous: Can and container as far as it is a question of a can-like container with at least one cover of metal. Thus the containers may also be made of for instance glass. The tools for the present machine for closing cans have been described as rollers or rolls. The expressions rollers and rolls should be considered synonymous if the closing machine is used for closing or rolling of parts in connection with the closing of the cans. The expression sensor head is used synonymous with transducer and emitter.

In connection with non-perishables or semi-perishables it is of vital importance that the can 3 is completely closed, i.e. hermetically sealed and under complete control. When a product reaches the consumer, it is of decisive importance for the quality of the product, especially for the shelf life, that the hermetical seal is efficient. The hermetical closing can be destroyed by the can 3 being subjected to a molestation. However, an efficient closing of the can 3 renders it possible for the can to stand a considerable molestation without causing openings or cracks therein. When openings arise in a can 3, the content thereof is most likely to be tainted due to growth of bacteria. Even through an efficient succeeding preparation (heating) of the content food poisonings and possible deaths may occur.

The invention is based on the idea that vibrations in the closing tool provide an accurate picture of the closing procedure in such a manner that an abnormal closing results in an atypical vibration pattern.

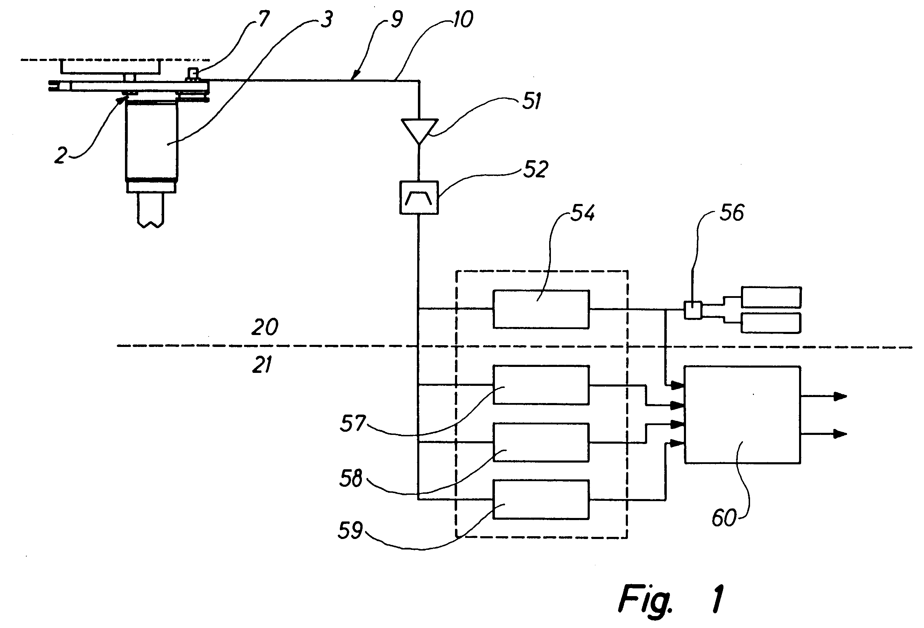

A system included in the closing machine for filling, closing, and controlling cans and the content thereof can be formed so as to match various degrees of development. Fig. 1 illustrates the most simple embodiment indicated at 20, i.e. with the units indicated above the dotted line 20.

Here the defective can 3 is merely carried away in case of a vibration pattern indicating errors. According to more advanced embodiments of the system, cf. 21 below the dotted line, a more extensive signal processing can furthermore be performed in such a manner that information are detected on each can, i.e. the relevant vibration pattern. These details are compared and processed in such a manner that they can optionally be related to a specific type of error or a specific malfunctioning in the closing machine 2.

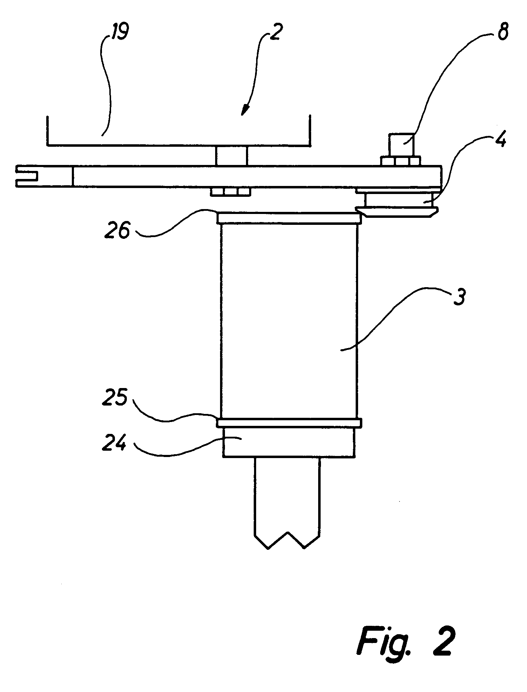

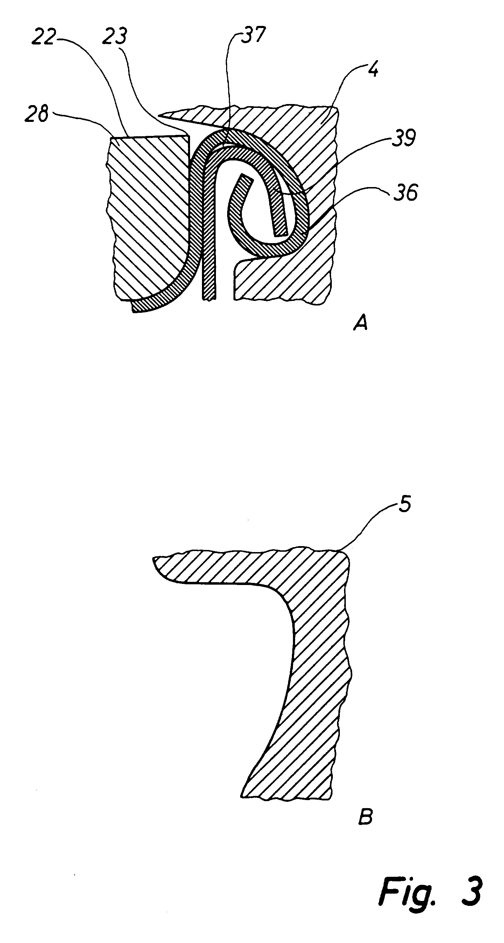

Below the closing procedure is briefly described for a can 3 with reference to Figs. 2 and 3. Initially the bent frame of the can is manufactured, whereafter an end bottom 25 is mounted thereon to form a can 3 open at one end. Then the desired content can be filled therein. This content can be more or less prepared articles of food. The articles of food are optionally subjected to a treatment in the can 3, such as a sterilization, a heating or a radiation. Then the cover 26 is mounted thereon by means of a cartridge 28 ensuring that the necessary holding power and friction are present during the closing of the can 3. Now a front closing roll 4 engages the edge of the cover 26 and the can 3, cf. Fig. 3A. The front roll 4 is structured in such a way that the edge 36 of the cover on the bottom side is provided with a type of sealing mass 37 and can be bent below a beaded edge 39 on the can 3. Subsequently, a rear closing roll 5 (a sectional view thereof appearing from Fig. 3B) compresses a flange by a pressure against the cartridge 28. The can 3 is closed either by the can 3 and the cover 36 being rotated while the front and rear roll 4, 5 are retained, or by the cover 36 and the can 3 being retained while the front and rear roll 4, 5 rotate along the edge thereof. During the closing several sets of front and rear rolls can optionally be used.

The most frequent errors of the closing machine (in general designated the reference numeral 2) involving closing errors are found in an incorrect geometry of the closing rolls 4, 5, an incorrect biasing of the cartridge 28, a worn cartridge 28, or that sealing mass 37 or content of the can is present on the tool. Material defects or variations in the thickness can, however, also apply.

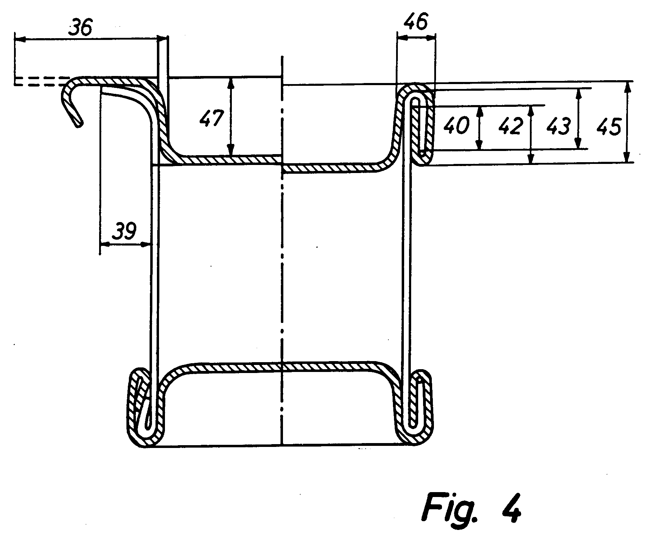

Below the most ordinary errors associated with packing of perishables are described. The most ordinary error in connection with non-perishables or sterilized products is a poor folding of the can 3. A poor folding of the can 3 can be caused by several errors arisen either before or after the closing of the can. Usually, most errors arise, however, during the closing. A significant defect of the can 3 occurs if the rabbet 40, cf. Fig. 4, is too small or if the flange is not sufficiently compressed.

Below the four most ordinary folding errors have been described, viz. the one called a false engagement, the one called droop, the one called fold, and the one called creases. A false engagement is caused by the cover hook 42 and the blunt hook 43 not engaging one another correctly, cf. Fig. 4, at least over a portion of the circumference of the can 3. When the false engagement applies to the entire circumference of the can 3, it can be difficult to detect the error by way of optical methods because the folding height 45 and the thickness 46 appear normal. Droop is also called formation of pins and is caused by the cover hook 42 being lowered relative to the usual geometric line described by the fold. This error is in connection with greater droops usually visible on the outer side of the can 3 because the folding height is increased. A fold or folding is associated with the cover hook 42. The fold usually provides (i.e. a protuberance) on the outer side of the can 3 which is easy to detect by an optical inspection. Creases are caused by the cover edge 36 being rolled inwards at the front roll 4. Usually these creases can be corrected or pressed out of the rear roll 5 later on, whereby only a slight indication of creases remains. When the cover edge suffers from large creases, such as due to a worn or poorly adjusted rear roll 5, closing errors arise and cause leaks.

The known methods of detecting closing errors on cans are encumbered with the drawback that they are not used until the can 3 has been closed, i.e. the control does not apply to the closing procedure. Furthermore, some of the methods require a predetermined storage of the can 3 before the control can be performed. Several of the errors not appearing until the cans 3 are handled cannot be detected by a control immediately after the closing procedure. Below the known methods are briefly described as well as the types of errors which are difficult to handle by said methods. One way of controlling the pressure in the can 3 is to ensure that a low pressure applies to the interior of the can 3 during the filling and closing procedure in such a manner that the cover 26 of the can is bent downwards. When the can 3 is poorly closed, bacteria can penetrate into the can and the pressure in said can is increased with the result that initially the cover 26 is automatically straightened whereafter the can 3 bulges outwards. Another method is to subject the filled and closed can 3 to the effects of vibrations either mechanically or electromagnetically followed by an analysis of the natural oscillations of the can 3. The resulting oscillating pattern deviates from the oscillating pattern caused by the rolling together (the closing) and is not detected until long after the closing of the can 3 because the microorganisms must be allowed to develop before the measuring is performed. The geometric or optical control of the fold cannot be performed until the can has left the closing machine 2. The fold is preferably automatically inspected with the result that a number of errors can be detected. However, the automatic detection cannot disclose the severe errors caused by a false engagement between the cover and the body of the can because the outer geometry is like the geometry of a conventionally closed can 3. Finally, it is known to use ultrasound-based methods for controlling the assemblings of the can, especially the often welded side seam.

The function of the closing machine 2 according to the invention is described in the following. The can 3 is usually arranged in such a manner that it can be advanced towards the closing rolls 4. 5. The cover 26 is arranged on the closing cartridge 28 and is carried downwards from the top or in the direction of gravity. The edges of both the cover 26 and the can 3 are folded by means of the closing rolls 4, 5 including the front and the rear roll, whereby a folding is performed. A sensor head 7 in form of an accelerometer 8 is arranged on the closing roll 4, 5 (either on the front or the rear roll). The sensor head emits a signal 9 being amplified by an amplifier 51 and transmitted to a filter bank 52 where it is subjected to a filtration and subsequently transmitted to an RMS detector 54. Here the level of the signal 9 can be analyzed so as to allow an evaluation of whether the can 3 is to be finally accepted or not, cf. 56 in Fig. 1. A succeeding mechanical switch in the production line can subsequently discard the defective cans at 56 in Fig. 1. The latter should be performed immediately after the can 3 has left the closing machine 2. A more detailed examination of the can 3 shows then the errors with which the can is in fact encumbered.

The analysis can for instance be performed by the signal 9 being subjected to a fourier analysis 59 or an RMS analysis 54. The fourier or RMS-analyzed signal can then be compared with known references, each known reference corresponding to known closing errors. The comparison can for instance be performed by means of a correlation analysis. When the correlation of one of the known references is sufficiently high, the latter indicates the presence of a specific closing error.

Furthermore the so-called peak factor can be measured. The peak factor 57 is the ratio of the peak value to the RMS value 54. The peak factor analysis is an analysis insensitive to the absolute level and noise, but causes strong oscillations when errors suddenly occur during the procedure. When the procedure runs smoothly and a higher signal level applies for some reason, the analysis does not result in an indication. The analysis is, however, still sensitive to peaks (short peaks) which is very advantageous because it results in less false alarms than other analyses. The RMS analysis is also applying, but it depends on the absolute signal level and can thereby result in more false alarms.

As an alternative a curtotis analysis 58 can be performed. By this analysis the statistic moment of the 4th order is detected.

The three analysis circuits 57, 58, 59 emit data to a neural network 60 which on the basis of previous information can decide whether a possible tendency applies and whether corrections are optionally to be performed, such as adjustment of the arrangement of the front and the rear roll 4, 5.

Irrespective of the fact whether a simple system, cf. 20 in Fig. 1, or a more advanced system, cf. 21, is used, the sensor head 7 or the accelerometer 8 must be placed as close as possible to the closing rolls 4, 5. The vibration signals from the closing procedure are amplified at 51 and filtered at 52 and subjected to a signal analysis. A part of the signal transmission 10 can optionally be performed wireless although such a procedure can involve further noise. By the simple embodiment 20, the RMS-value 54 of the accelerometer signal 9 indicates clearly within a selected frequency area that an error occurs during the closing of the can 3. A false engagement between the cover and the body of the can can for instance be detected in this manner. Further signal processing can provide more detailed information on the types of error, the causes, and the wear of the tools. The additional signal analysis can optionally be performed in a dedicated computer, such as a personal computer, including a neural network in form of a programme.

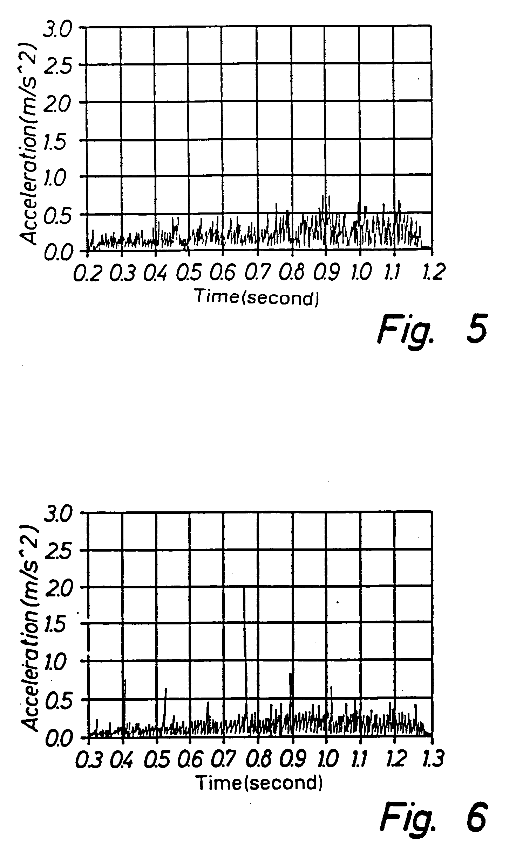

Fig. 5 illustrates a time signal within the frequency range from 2 kHz to 6 kHz of a can without errors.

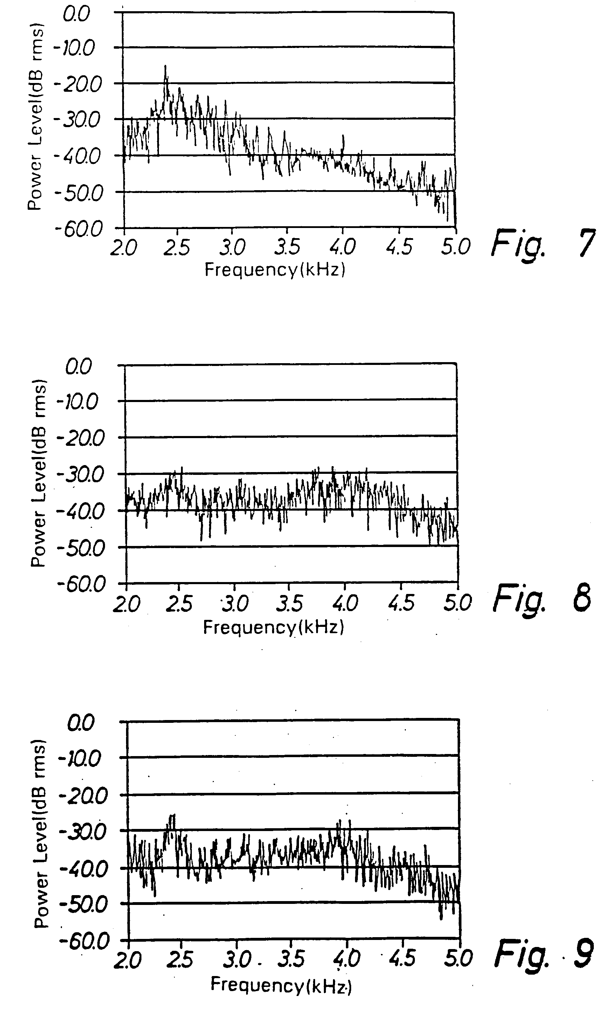

Fig. 6 illustrates a time signal within the frequency range from 2 kHz to 6 kHz of a can with errors in the cover.

Fig. 7 illustrates a power spectrum of a can without errors.

Fig. 8 illustrates a power spectrum of a can with a false engagement.

Fig. 9 illustrates a power spectrum of a can with errors in the folded edge.

Signals measured by the accelerometer and shown in Figs. 5 to 9 are specific for the specific machine and set-up. These power spectra and time signals cannot, however, be compared with corresponding spectra and signals detected on another machine. It should, however, be possible to expect some common features of the machines, but in order to provide the best references the power spectra and the time signals must be detected on the specific machine which is to be used, whereby these power spectra and time signals represent a standard.

Incorrectly closed cans 3 can cause a smudging of the closing machine 2 and consequently a pollution of both the exterior and of the content of succeeding cans 3, which would otherwise be correctly closed.

The purpose of production of canned food is to provide the consumer with an article of food being uncomplicated to prepare at the same time as the article of food possesses a relatively long self life as long as the can has not been opened. A proviso here is that the can had been correctly closed from the start.

The final product is a correctly closed can with a well-known content in a specific amount. The can must furthermore be clean on the outside and free of sharp edges, bulges or other mechanical defects.

The starting product is prepared articles of food ready for packing. By ready is meant preserved, sterilized or treated in another manner so that the taste, the nutrient value and the like do not change in an uncontrolled atmosphere for a long period of time. Before the prepared articles of food can be filled into the can in question, it must be prepared therefor. The can is usually made of metal plate. The cans can usually be divided into two categories, viz. the deeply drawn and the bent ones. The deeply drawn cans are usually made of aluminium of a high purity. The bent cans can, however, also be made completely or partially of aluminum, but they are usually made of steel plate which is much more inexpensive. The steel plate can be subjected to a surface treatment before it is bent or rolled, as it can for instance be provided with printed pictures or text, or it can be treated against rust. The steel plate is usually assembled either by way of folding, soldering or welding, which applies to both the side seam, the bottom seam, and the top seam.

A quality control of both the can and the prepared article of food is of major importance. Usually no problems are involved in controlling the quality of a steel or aluminium plate. The problems usually apply to the quality of the assemblings. The use of soldered cans involve problems of leaking solderings as well as of the surface treatment of the soldering. The same applies to welded cans. The invention is particularly suited for folded cans because, as previously mentioned, it is possible to provide the rolls or rollers assembling the edges with the accelerometer according to the invention, which can detect the vibrations in both the rollers and the can.

The closing machine according to the invention must be mounted on a stable base. If not, shakings and vibrations can cause distortions in the machine, which in turn can cause an uneven load of the members of the machine and thereby a reduced life of the machine. A risk further exists that the settings of the machine change during the running, which can cause errors in the folding together of the can members.

An insufficient cleaning is detrimental to the machine and can destroy the packed products in several ways. Spilled acid or salt canned products must be removed or washed away immediately as they can cause a biting and formation of rust on the various members of the machine. Canned residues allowed to remain on the machine can cause strong bacterial attacks being transferred to the product in the cans during the folding and which furthermore can spread to the entire factory.

The closing cartridge or the top cartridge 28 must be dimensioned such that it fits well to the type of cover 26 to be mounted on the can. Round covers 26, cf. Fig. 2, must usually just be retained on the cartridge 28 by way of friction. Accordingly an advantage is found in the height of the cartridge 28 being between 0 and 1/10 mm larger than the depth 47 of the cover. The cartridge 28 should be of a shape mating the cover 26. The fit between the external diameter of the closing cartridge 28 and the internal diameter of the cover 26 should be such that a fraction is obtained in the radial direction. When the cartridge 28 can be pressed downwards into contact with the cover 26, the fit is usually too loose as it is then possible for the cover 26 to slide on the cartridge 28 with the result that errors occur in connection with the folding. The cartridge 28 must comprise a planar top side 22 and a sharp edge 23. Worn cartridges 28, i.e. the sharp edge 23 has been worn, can cause errors because the cans 3 may be retained on the cartridge 28 during the folding and the fold may be leaking. The same applies to cartridges 28 where there is a clearance between the cartridge 28 and the cover 26.

The front closing roll 4 must be formed in such a way that it can bend the cover edge 36 inwards below the folded edge 39. A specific cover edge width 36 and can diameter 3 require a specific size of the profile of the closing roll 4. The cover edges 36 have in connection with various cover diameters been selected in such a way that the same final folding height 45 applies within a specific diameter range. In this manner the number of various closing roll profiles can be reduced. The profile of the closing roll 4 must be shaped such that the cover edge 36 is bent downwards as smoothly as possible and pushed inwards and upwards below the folded edge 39.

The rear closing roll 5 serves to compress the fold after the front closing roll 4 has bent the edge 36 of the cover inwards below the folded edge 39. The profile of the rolls 4 and 5 deviate from one another, cf. Fig. 3.

The size and shape of the closing rolls 4, 5 depend also on the structure and dimension of the can 3. It is always important to use the correct rolls 4, 5 and the correct closing cartridge 28 for the various cans 3. The durability of the rolls 4, 5 is limited because they are subjected to a very hard influence, and although they are made of extremely wear-resisting material, a wear and tear and corrosion are unavoidable.

The appearance or geometry of the fold is substantially determined by the profile of the closing roll 4, 5. The profile of the closing roll 4 has been chosen so as to obtain the optimum engagement. The compression of the rear roll 5 of the fold implies that the blunt hook 43 is of an optimum length and thereby sealed by the sealing material 37 in the bottom of the cover hook 42. It is important for the fold that the following members have the correct dimensions: top fold 40, blunt hook 43, cover hook 42, and that the compression 46 (the thickness of the fold) and the height 45 of the fold have been correctly chosen. An important factor for a correct fold is a suitably large top fold 40 combined with a correct compression.

A proviso for a sufficiently good blunt hook 43 in the fold is that a well folded edge 39 has been provided. The width 39 and the radius of the folded edge must be adapted to the shape and geometry of the cover 26. The folded edge 39 is obtained by the edges of the body being bent outwards by way of a folding procedure.

A satisfying folding requires furthermore a correct structure of the cover and the bottom as well as an exact processing. The size and appearance of the cover hook 42 in the fold depends on the width 36 of the cover edge. A too wide cover edge 36 can cause creases because too much material is present in the fold. Another proviso is that the cover edge 36 and the folding thereof result in the best possible profile of said cover edge. A correctly shaped cover edge profile is the best possible basis for a fold without formation of unfortunate creases and other defects.

The folding and the folding principle are independent of both the closing machine 2 and the size of the can 3. The folding is performed in two steps, whereby the first step serves to assemble the can 3 and the cover 26 by rolling the cover 26 and the folding edge 39 inwards, and the second step serves to compress the fold in such a manner that a hermetically sealed connection exists between the cover 26 and the can 3. A good closing result depends on several factors, viz. the general state of the closing machine 2 with respect to wear and tear, setting, and stability, the shape and condition of the folding and low-tension curve, the dimensions and condition of the closing rolls 4, 5, and last but not least the operability of the low tension in the closing machine 2.

The top closing cartridge 28 must be centred relative to the axis of the can 3 and be vertically arranged above said can 3 in such a manner that the pressure during the folding propagates uniformly across the circumference of the can 3. The same conditions apply to the bottom cartridge 24, which, however, is merely to support the can 3 during the closing procedure. The top cartridge 28 must be adjusted with respect to the height in such a manner that the closing roll 4 is allowed a sliding fit on the top side 22 of the cartridge 28. When a clearance exists between the top cartridge 28 and the closing roll 4, this may result in a "sharp closing" involving a risk of the can 3 sticking on the cartridge 28. At worst the fold can be cut through.

The low-tension is of importance for a correct fold. An incorrect low-tension frequently results in an incorrect fold. A too low low-tension implies that the blunt hook 43 is too small and the total height of the can 3 too large. The latter is due to the fact that the low-tension is too low to maintain a correct distance between the top cartridge and the bottom cartridge 28, 24 during the folding procedure. A coarse control of the low-tension can be performed by an examination of how much the height of the can 3 has changed during the closing procedure. The latter is performed in a very simple manner by comparing a closed can with an unclosed can. The height of the closed can must be approximately 1/10 mm lower than the height of the unclosed can. A dynamometer or a low-tension meter renders it possible to measure the low-tension force, which is advantageous in connection with machines comprising several spindles because it is then possible in a fast manner to control and set the same low-tension on all of them.

The closing roll 4 must be adjusted with respect to the height in such a manner that a sliding fit exists between this roll 4 and the top side 22 of the closing cartridge 28. The closing roll 4 must not slide too close on the cartridge 28 or rotate with a clearance. It is important that the front roll 4 runs without clearance in a strong bearing which is able to transfer both radial and axial forces, and that all the assemblings are free of clearance. When these measures have been taken, the closing roll 4 must be set in such a manner that it rolls the cover edge 36 correctly inwards (i.e. pushes the cover edge 36 inwards and upwards below the folded edge 39). Both an insufficient and an exaggerated rolling inwards car, result in poor folds. The most usual error is, however, found in an insufficient rolling inwards. When the rolling inwards is too insufficient, creases can, as mentioned previously, arise, i.e. bulges or waves along the fold. It is almost impossible to remove these creases, and the channels arising downwards through the creases can cause penetration of bacteria. Sharp creases can also influence the layer of lacquer in the fold in such a manner that cracks arise with a possibility of uncovered metal. Large or sharp-edged creases can also arise when an incorrect roll profile is used. It can be difficult to avoid creases in connection with small can diameters and cans 3 of a non-round shape.

The rear closing roll 5 must be set with a sliding fit against the top cartridge 28, or slightly higher. The compression must be set such that the roll 5 compresses the five layers of plate thoroughly in the fold. No cavities must be found in the fold where the sealing material 37 is to seal. A too hard compression results in a too high fold, and that the efficient top fold 40 is too small, the cover hook 42 being pressed downwards. When the roll 5 has been set too high, the fold can be pressed inwards over the top cartridge 28, whereby the can sticks to the cartridge 28. At worst, the fold is cut through. The interior of the cover 26 reveal traces from the pressure of the closing roll. These traces must clearly be uniform along the entire circumference of round cans and without sharp transitions. Cans of another shape (non-round cans) must show traces which are most significant at the smallest radii and which should be visible along the entire circumference.

Variations in the measurements and properties of the fold depend inter alia on the closing machines used. New fully automatic closing machines 2 result in a high accuracy and maintain the setting, the reason why they only allow minor variation possibilities. Older, worn machines result in high variations and often deviate from the setting. In order to determine the extent of a reasonable control, the variations should primarily be examined, said variations arising with respect to the measurements and properties to be controlled. Statistic methods present a great help in evaluating the results of this examination and in planning the control.

In order to ensure the highest possible security that the cans 3 become sealed during the folding, the closing machine 2 should be set in such a manner that the dimensions of the fold are as close to the ideal values as possible. The latter applies to both the internal and the external dimensions.

The commonly known control include a visual control (of the appearance of the fold), of the compression (the thickness of the fold), the blunt hook, the top fold, the height of the fold, and the tightness.

The discarded cans should be related to the signals of the errors causing the discarding thereof. In this manner the risk has been minimized of the machine merely discarding a lot of cans without the closing error being determinable. Some of the closing errors can only be found by way of destructive testing, i.e. a cutting up of the can whereby the risk applies of the "error being cut away" if said error is unknown. The closing error causing the discarding of the can then not be used for extending the knowledge of the closing machine nor of the closing procedure. The error can either be shown in form of a paper print-out, shown on a data screen, or indicated on the can either by way of colour or by way of code.

The invention is not restricted to the above embodiments, but can be varied in many ways without thereby deviating from the scope thereof, as defined by the appended claims.

## Claims

1. A method of controlling the closing of a can (3) or a container being closed by mens of a closing machine (2) which comprises one or more closing rolls or rollers (4, 5), the control of said closing being performed by means of a sensor head (7), **characterised** in that the sensor head (7) used is formed by an accelerometer (8) arranged on or adjacent one of the closing rolls or rollers (4, 5) closing the cans (3) or the containers, and that a signal (9) emitted by the accelerometer (8) is compared with known references so as to indicate possible closing errors.

2. A method as claimed in claim 1, **characterised** in that the signal (9) emitted by the accelerometer (8) is subjected to a signal analysis before it is compared with known references so as to indicate possible closing errors.

3. A method as claimed in claim 1 or 2, **characterised** in that the signal (9) emitted by the accelerometer (8) is subjected to a simple signal analysis, such as an RMS or peak factor analysis before it is compared with known references so as to indicate possible closing errors.

4. A method as claimed in claim 1 or 2, **characterised** in that the signal (9) emitted by the accelerometer (8) is subjected to a more extensive analysis, such as a fourier, peak factor or curtotis analysis before it is compared with known references so as to ensure a supplementary failure diagnosis.

5. A method as claimed in one or more of the preceding claims, **characterised** in that after a first signal analysis the signal (9) emitted by the accelerometer (8) is subjected to a more extensive analysis by means of a neural network (14).

6. A closing machine for carrying out the method as claimed in one or more of the preceding claims 1 to 5 and comprising one or more closing rolls or rollers (4, 5) as well as at least one sensor head (7), **characterised** in that the sensor head (7) is arranged adjacent the closing rolls or rollers (4, 5) and is formed by an accelerometer (8) collecting information, such as vibrations.

7. A closing machine as claimed in claim 6, **characterised** in that the accelerometer (8) is arranged on the bearing of one roll or roller.

8. A closing machine as claimed in claim 6 or 7, **characterised** in that the roller adjacent the accelerometer is a driven roller.

9. A closing machine as claimed in one or more of the preceding claims 6 to 8, **characterised** in that the accelerometer (89 is mounted on the driving shaft (17) of a driving motor (19) for one of the closing rollers (4, 5).

10. A closing machine as claimed in one or more of the preceding claims 6 to 9, **characterised** in that a sensor head is arranged adjacent each closing roll or roller (4, 5).

## Patentansprüche

1. Verfahren zur Verschlußkontrolle einer Dose (3) oder eines Behälters, der durch eine Verschlußmaschine (2) verschlossen wird, die eine oder mehr Schließwalzen oder -rollen (4, 5) aufweist, wobei die Verschlußkontrolle mit einem Sensorkopf (7) vorgenommen wird, dadurch gekennzeichnet, daß der verwendete Sensorkopf (7) durch einen Beschleunigungsmesser (8) gebildet wird, der auf oder einer der Schließwalzen oder -rollen (4, 5) benachbart angeordnet ist, die die Dosen (3) oder die Behälter verschließen, und daß ein durch den Beschleunigungsmesser (8) ausgesandtes Signal mit bekannten Vergleichsgrößen verglichen wird, um mögliche Verschlußfehler anzuzeigen.

2. Verfahren nach Anspruch 1, dadurch gekennzeichnet, daß das durch den Beschleunigungsmesser (8) ausgesandte Signal (9) einer Signalanalyse unterzogen wird, bevor es mit bekannten Vergleichsgrößen verglichen wird, um mögliche Verschlußfehler anzuzeigen.

3. Verfahren nach Anspruch 1 oder 2, dadurch gekennzeichnet, daß das durch den Beschleunigungsmesser (8) ausgesandte Signal (9) einer einfachen Signalanalyse, wie z.B. einer RMS- oder Scheitelfaktoranalyse, unterzogen wird, bevor es mit bekannten Vergleichsgrößen verglichen wird, um mögliche Verschlußfehler anzuzeigen.

4. Verfahren nach Anspruch 1 oder 2, dadurch gekennzeichnet, daß das durch den Beschleunigungsmesser (8) ausgesandte Signal (9) einer umfassenderen Analyse, wie z.B. einer Fourier-, Scheitelfaktor- oder Curtotis-Analyse, unterzogen wird, bevor es mit bekannten Vergleichsgrößen verglichen wird, um eine ergänzende Fehlerdiagnose sicherzustellen.

5. Verfahren nach einem der vorhergehenden Ansprüche, dadurch gekennzeichnet, daß nach einer ersten Signalanalyse das durch den Beschleunigungsmesser (8) ausgesandte Signal (9) einer umfassenderen Analyse durch ein neuronales Netzwerk (14) unterzogen wird.

6. Verschlußmaschine zum Ausführen des Verfahrens nach einem der vorhergehenden Ansprüche 1 bis 5 und mit einer oder mehr Schließwalzen oder -rollen (4, 5) sowie zumindest einem Sensorkopf (7), dadurch gekennzeichnet, daß der Sensorkopf (7) den Schließwalzen oder -rollen (4, 5) benachbart angeordnet ist und durch einen Beschleunigungsmesser (8) gebildet wird, der Informationen, wie z.B. Schwingungen, sammelt.

7. Verschlußmaschine nach Anspruch 6, dadurch gekennzeichnet, daß der Beschleunigungsmesser (8) auf dem Lager einer Walze oder Rolle angeordnet ist.

8. Verschlußmaschine nach Anspruch 6 oder 7, dadurch gekennzeichnet, daß die dem Beschleunigungsmesser benachbarte Rolle eine angetriebene Rolle ist.

9. Verschlußmaschine nach einem der vorhergehenden Ansprüche 6 bis 8, dadurch gekennzeichnet, daß der Beschleunigungsmesser (8) auf der Antriebswelle (17) eines Antriebsmotors (19) für eine der Schließrollen (4, 5) angebracht ist.

10. Verschlußmaschine nach einem der vorhergehenden Ansprüche 6 bis 9, dadurch gekennzeichnet, daß jeder Schließwalze oder -rolle (4, 5) benachbart ein Sensorkopf angeordnet ist.

## Revendications

1. Procédé de commande de la fermeture d'une boîte (3) ou d'un récipient qui est fermé(e) au moyen d'une machine de fermeture (2), qui comprend un ou plusieurs rouleaux ou galets de fermeture (4, 5), la commande de ladite fermeture étant réalisée au moyen d'une tête de capteur (7), caractérisé en ce que la tête de capteur (7) utilisée est formée par un accéléromètre (8) placé sur ou à proximité immédiate d'un des rouleaux ou galets de fermeture (4, 5) qui ferment les boîtes (3) ou les récipients, et en ce qu'un signal (9) émis par l'accéléromètre (8) est comparé à des valeurs de référence connues afin d'indiquer d'éventuelles erreurs de fermeture.

2. Procédé selon la revendication 1, caractérisé en ce que le signal (9) émis par l'accéléromètre (8) est soumis à une analyse de signal avant d'être comparé à des valeurs de référence connues, afin d'indiquer d'éventuelles erreurs de fermeture.

3. Procédé selon la revendication 1 ou 2, caractérisé en ce que le signal (9) émis par l'accéléromètre (8) est soumis à une analyse de signal simple, telle qu'une analyse de valeur efficace ou facteur de crête, avant d'être comparé à des valeurs de référence connues, afin d'indiquer d'éventuelles erreurs de fermeture.

4. Procédé selon la revendication 1 ou 2, caractérisé en ce que le signal (9) émis par l'accéléromètre (8) est soumis à une analyse plus poussée, telle qu'une analyse de Fourier, de facteur de crête ou de curtotis, avant d'être comparé à des valeurs de référence connues, afin de garantir un diagnostic de défaillance supplémentaire.

5. Procédé selon une ou plusieurs des revendications précédentes, caractérisé en ce que, après une première analyse de signal, le signal (9) émis par l'accéléromètre (8) est soumis à une analyse plus poussée au moyen d'un réseau neuronal (14).

6. Machine de fermeture pour la mise en oeuvre du procédé selon une ou plusieurs des revendications précédentes 1 à 5 et comprenant un ou plusieurs rouleaux ou galets de fermeture (4, 5) ainsi qu'au moins une tête de capteur (7), caractérisée en ce que la tête de capteur (7) est placée à proximité immédiate des rouleaux ou galets de fermeture (4, 5) et est formée par un accéléromètre (8) qui recueille des informations telles que des vibrations.

7. Machine de fermeture selon la revendication 6, caractérisée en ce que l'accéléromètre (8) est placé sur le palier d'un rouleau ou d'un galet.

8. Machine de fermeture selon la revendication 6 ou 7, caractérisée en ce que le galet adjacent à l'accéléromètre est un galet entraîné.

9. Machine de fermeture selon une ou plusieurs des revendications précédentes 6 à 8, caractérisée en ce que l'accéléromètre (8) est monté sur l'arbre d'entraînement (17) d'un moteur d'entraînement (19) prévu pour l'un des galets de fermeture (4, 5).

10. Machine de fermeture selon une ou plusieurs des revendications précédentes 6 à 9, caractérisée en ce qu'une tête de capteur est placée à proximité immédiate de chaque rouleau ou galet de fermeture (4, 5).
